# NEUE EUROPÄISCHE PATENTSCHRIFT

(11) **EP 0 782 656 B2**
(45) Veröffentlichungstag und Bekanntmachung des Hinweises auf die Entscheidung über den Einspruch: **30.06.2004**
(45) Hinweis auf die Patenterteilung: 04.03.1998
(21) Anmeldenummer: 95932773.5
(22) Anmeldetag: 19.09.1995
(51) Int. Cl.: E06B 3/673

(54) **VERFAHREN UND VORRICHTUNG ZUM AUFTRAGEN EINES PLASTISCHEN ABSTANDHALTERS AUF EINE GLASTAFEL**
PROCESS AND DEVICE FOR APPLYING A PLASTIC SPACER TO A GLASS PANE
PROCEDE ET DISPOSITIF D'APPLICATION D'UN ELEMENT D'ECARTEMENT EN PLASTIQUE SUR UNE PLAQUE DE VERRE

(30) Priorität: 22.09.1994 DE 4433749
(43) Veröffentlichungstag der Anmeldung: 09.07.1997
(73) Patentinhaber: Lenhardt Maschinenbau GmbH, D-75242 Neuhausen-Hamberg (DE)
(72) Erfinder: SCHUBERT, Heinz, D-75173 Pforzheim (DE)
(74) Vertreter: Twelmeier, Ulrich, Dipl.Phys.
(86) Internationale Anmeldenummer: PCT/EP1995/003684
(87) Internationale Veröffentlichungsnummer: WO 1996/009456

(56) Entgegenhaltungen:
- EP-B- 0 152 807
- EP-B- 0 176 388
- AT-B- 368 112
- DE-A- 3 935 994
- US-A- 3 957 406
- US-A- 4 120 999
- US-A- 4 581 276

## Beschreibung

Die Erfindung geht aus von einem Verfahren mit den im Oberbegriff des Anspruchs 1 angegebenen Merkmalen.

Aus der EP-B-0152807 ist es bekannt, beim Zusammenbauen von Isolierglasscheiben, deren Glastafeln durch einen plastischen Abstandhalter auf Abstand gehalten und miteinander verklebt sind, zunächst den strangförmigen Abstandhalter auf eine erste der beiden Glastafeln längs ihres Randes aufzutragen, wobei zwischen den Enden des Abstandhalters im Bereich einer Ecke der Glastafel eine Lücke verbleibt, die erst nach dem Zusammenbauen und Verpressen der Isolierglasscheibe nachträglich geschlossen wird. Das Verschließen muß sehr sorgfältig erfolgen, damit keine Spalte offenbleiben, durch welche Feuchtigkeit in den Innenraum der Isolierglasscheibe eindringen könnte. Aus der EP-B-0152807 ist es bekannt, die Lücke dadurch zu schließen, daß man mit einem erwärmten Formkörper um jene Ecke des plastischen Abstandhalters, an welcher sich die Lücke befindet, herumfährt, wodurch der thermoplastische Kunststoff, aus welchem der Abstandhalter besteht, erweicht und die beiden Enden des Stranges, aus dem er gebildet ist, sich zu einem endlosen Rahmen miteinander verbinden. Bei der praktischen Durchführung stößt dies jedoch auf Probleme: mit dem erwärmten Formkörper kann man die Stoßflächen zwischen den beiden Enden des Abstandhalters nicht erreichen und auch nur schwierig Druck auf diese ausüben, weil man nur von der Außenseite, das heißt, parallel zu den Stoßflächen, auf den Abstandhalter einwirken kann. Besonders schwierig wird das Schließen der Lücke, wenn sie von vorn herein nicht ganz eng ist, denn dann genügt ein Einwirken mit einem erwärmten Formkörper alleine nicht, vielmehr muß dann noch zusätzlich thermoplastisches Material in die Lücke eingeführt werden, was schwierig ist und obendrein zu einer störend auffallenden, unschönen Verbindungsstelle zwischen den beiden Enden des Abstandhalters führt. Auch in diesem Fall bleibt die Verbindungsstelle eine Schwachstelle in der sonst zuverlässigen Abdichtung des Innenraums der Isolierglasscheibe.

Aus der DE-A-4231424 ist es bekannt, die im Bereich einer Ecke liegende Lücke in einem plastischen Abstandhalter bereits vor dem Zusammenbau der Isolierglasscheibe zu schließen, indem man sowohl von der Innenseite als auch von den beiden Außenseiten her mit drei getrennt beweglichen Formteilen auf die Ekke einwirkt. Auf diese Weise erhält man eine bessere Verbindung zwischen den beiden Enden des Abstandhalters, allerdings mit erheblichem apparativen und vor allen Dingen zeitlichen Aufwand, der zu einer Verlängerung der Taktzeit der Vorrichtung führt, welche den Abstandhalter auf die Glastafel aufträgt.

Bei beiden aus dem Stand der Technik bekannten Arbeitsweisen ist nachteilig, daß der zwischen den Enden des Abstandhalters zunächst bestehende Spalt nicht reproduzierbar ist, weil unregelmäßig geformte Stoßflächen mit variierendem Abstand gebildet werden.

Der vorliegenden Erfindung liegt die Aufgabe zugrunde, einen Weg aufzuzeigen, wie beim Auftragen eines in situ extrudierten Stranges zur Bildung eines plastischen Abstandhalters Anfang und Ende des Stranges einfacher, schneller und sicherer miteinander verbunden werden können.

Diese Aufgabe wird gelöst durch das Verfahren mit den im Anspruch 1 angegebenen Merkmalen. Eine neue Vorrichtung zur Durchführung des Verfahrens ist Gegenstand des Anspruchs 5. Vorteilhafte Weiterbildungen der Erfindung sind Gegenstand der abhängigen Ansprüche.

Erfindungsgemäß wird der als Abstandhalter vorgesehene plastische Strang mittels einer Düse derart extrudiert und auf die Glastafel abgelegt, daß Anfang und Ende des Stranges nicht stumpf zusammenstoßen, sondern über eine Schrägfläche, die dadurch gebildet wird, daß die Dicke des Stranges beim Austreten aus der Düse am Anfang auf einer Strecke mit vorbestimmter Länge von Null auf die Sollstärke des Strangs gesteigert und komplementär dazu am Ende des Strangs auf derselben Strecke von der Solldicke auf Null verringert wird, was sich mit Hilfe einer Düse, deren Austrittsquerschnitt veränderlich ist und die, während sie an einer Glastafel entlangbewegt wird, von dieser auch abgehoben werden kann, erreichbar ist. Unvermeidlich ergibt sich auch bei dieser Arbeitsweise eine Fuge zwischen Anfang und Ende des Strangs, diese Fuge wird jedoch beim Zusammenbau der Isolierglasscheibe unter Druck gesetzt, weil es zwingend erforderlich und üblich ist, Isolierglasscheiben zu verpressen, einerseits um die gewünschte Solldicke der Isolierglasscheibe zu erreichen, andererseits um eine feste und gegenüber Wasserdampfdiffusion dichte Verbindung zwischen den Flanken des plastischen Abstandhalters und den anliegenden Glastafeln zu gewährleisten. Bei diesem Verpressen werden zwangsläufig auch die beiden Schrägflächen am Anfang und am Ende des Strangs gegeneinander gepreßt und ohne weitere Maßnahme dicht miteinander verbunden. Im Gegensatz zum Stand der Technik ist es nicht erforderlich, noch nachträglich mit irgendwelchen mechanischen, beheizten Einrichtungen auf die Verbindungsstelle einzuwirken; der damit verbundene apparative Aufwand fällt ersatzlos weg, und das Schließen des Abstandhalters erfordert keinerlei zusätzliche Bearbeitungszeit, ist also auf die Taktzeit einer Isolierglasfertigungslinie ohne jeden Einfluß. Der wirtschaftliche Vorteil der Erfindung ist deshalb erheblich.

Die gewünschte dichte Verpressung der beiden schrägen Stoßflächen wird begünstigt, wenn die Oberseite des extrudierten Strangs mit einer geringen Wölbung gebildet wird und/oder wenn an der Stoßstelle zwischen Anfang und Ende des Strangs der auf dem schrägen Anfangsabschnitt liegende Endabschnitt mit seiner Oberseite die Solldicke des Strangs ein wenig übersteigt, so daß die Verpressung des Abstandhalters im Bereich der Stoßstelle automatisch etwas stärker ausfällt als im übrigen Bereich des Abstandhalters. Die Strecke, über welche sich die Stoßstelle erstreckt, ist zweckmäßigerweise zwischen 3 und 12 cm lang, als besonders geeignet hat sich in ersten Versuchen eine Länge von 8 bis 10 cm erwiesen.

Die Vorrichtung, mit welcher das erfindungsgemäße Verfahren vorzugsweise durchgeführt wird, hat eine Düse mit einem im wesentlichen rechteckigen Austrittsquerschnitt, der die Querschnittsgestalt des austretenden Stranges bestimmt, und einen Schieber, welcher die Austrittsöffnung der Düse verschließen kann und zu diesem Zweck mit einem ersten Antrieb versehen ist, der dem Schieber eine definierte, reproduzierbare Verschiebebewegung vermitteln kann. Zum Bewegen der Düse in einer Ebene, nämlich parallel zur ebenen Giastafel, ist ein zweiter Antrieb vorgesehen; dabei kann es sich um einen konventionellen x-y-Antrieb handeln, der die Düse in zwei zueinander senkrechten Richtungen bewegen kann, in Kombination mit einem Drehantrieb, welcher es gestattet, die Düse an den Ecken von rechteckigen Glastafeln um 90° umzuorientieren oder bei sogenannten Modellscheiben dem gekrümmten Rand einer Glastafel zu folgen. Anstelle eines x-y-Antriebes könnte aber auch ein Antrieb vorgesehen sein, der lediglich die Verschiebung der Düse in einer Richtung ermöglicht, wenn in Kombination damit die Glastafel in ihrer Ebene senkrecht zur Verschieberichtung der Düse verschiebbar ist. Schließlich ist noch ein dritter Antrieb zum Bewegen der Düse quer zur Ebene der Glastafel vorgesehen, um die Düse kontrolliert anheben zu können, wenn der Endabschnitt des Strangs extrudiert wird, welcher auf den keilförmigen Anfangsabschnitt des Strangs abgelegt wird. Um den Strangquerschnitt während des Entfernens der Düse von der Glastafel ensprechend dem größer werdenden Abstand verkleinern zu können, sind der Antrieb zum Betätigen des Schiebers und der Antrieb zum Entfernen der Düse von der Glastafel miteinander synchronisiert. Die Synchronisierung kann dadurch erfolgen, daß ein mechanisches, sich verzweigendes Getriebe durch einen gemeinsamen Motor angetrieben wird. Eleganter ist jedoch eine elektronische Synchronisierung zweier getrennter Motoren.

Die Austrittsöffnung der Düse könnte schräg gegen die Glastafeloberfläche gerichtet sein. Für den Bewegungsablauf und die Gleichmäßigkeit des auf die Glastafel abgelegten Strangs ist es jedoch günstiger, wenn die Austrittsöfffnung der Düse sich rechtwinklig zur Ebene der Glastafel erstreckt und der Bewegungsrichtung der Düse entgegengerichtet ist. Dabei sollte der Rand, der zwischen der Austrittsöffnung der Düse und der Glastafel notwendigerweise besteht, möglichst schmal sein, damit die Austrittsöffnung möglichst dicht an die Glastafel herangeführt werden kann. Mit der an die Austrittsöffnung anschließenden Endfläche kann die Düse beim Ablegen des Strangs auf der Glastafel gleiten. Sobald die Düse wieder am keilförmigen Anfangsabschnitt des Strangs, den sie abgelegt hat, anlangt, wird sie fortschreitend angehoben, wobei das Anheben mit dem gleichzeitig erfolgenden Schließen der Düse synchronisiert und auf die Geschwindigkeit der Bewegung parallel zur Glastafelebene abgestimmt ist, so daß ein keilförmiger Endabschnitt des Strangs erzeugt wird, welcher eine zum Anfangsabschnitt komplimentäre Gestalt hat, so daß der Anfangsabschnitt und Endabschnitt eine Dicke haben, die gleich oder etwas größer ist als die Dicke des Strangs außerhalb der Stoßstelle. Damit die Düse behinderungsfrei über den keilförmigen Anfangsabschnitt des Strangs hinwegbewegt werden kann, ist die Endfläche der Düse, welche der Glastafelebene zugewandt ist, vorzugsweise in ähnlicher Weise schräg zur Glastafelebene orientiert, wobei der Neigungswinkel gegenüber der Glastafelebene vorzugsweise etwas größer ist als er bei der Schrägfläche des keilförmigen Anfangsabschnitts des Strangs erzeugt wird. Eine solche Schrägfläche an der Spitze des Düsenkörpers ist allerdings nicht zwingend erforderlich, man könnte statt dessen auch eine Drehbewegung der Düse einleiten, durch die die Austrittsöffnung fortschreitend der Glastafelebene zugewendet wird, doch wäre eine solche Lösung aufwendiger und weniger elegant.

Der Schieber sollte vorzugsweise eine scharfe Vorderkante haben, um den austretenden Strang leicht begrenzen und schließlich kappen zu können. Wenn diese Vorderkante schwach konkav gewölbt ist und dadurch eine schwach konvex gewölbte Oberfläche des Strangs erzeugt, dann ist das für ein wirksames Verpressen der Stoßstelle und Abdichten der Isolierglasscheibe bei deren Zusammenbau von Vorteil.

Der weiteren Erläuterung der Erfindung dienen die beigefügten schematischen Zeichnungen.
- Figur 1: zeigt eine erfindungsgemäße Vorrichtung in der Vorderansicht,
- Figur 2: zeigt diesselbe Vorrichtung in einer teilweise geschnittenen Seitenansicht,
- Figur 3: zeigt einen Längsschnitt durch die Düse der Vorrichtung, und
- die Figuren 4-7: zeigen die Düse in vier verschiedenen Phasen der Erzeugung eines plastischen Abstandhalters auf einer Glastafel.

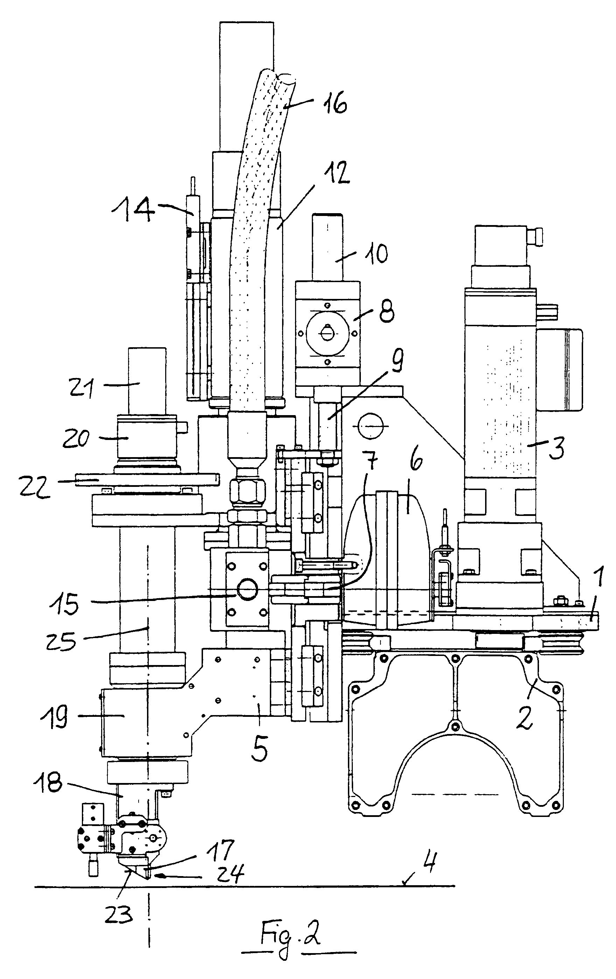

Die Vorrichtung hat einen Träger 1, welcher längs einer Traverse 2 durch einen Antrieb 3 senkrecht zur Zeichenebene der Figur 2 verschiebbar ist. Die Traverse selbst ist parallel zu einer Ebene 4, in welcher bei der Bearbeitung die Oberfläche einer Glastafel liegt, rechtwinklig zur Längserstreckung der Traverse 2 verschiebbar. Am Träger 1 ist ferner ein Block 5 angebracht, welcher von einem Drehzylinder 6 um eine zur Ebene 4 parallele, in der Zeichenebene der Figur 2 liegende Achse 7 verschwenkbar und durch einen aus einem Elektromotor 8 und einer Spindel 9 bestehenden Antrieb senkrecht zur Ebene verschiebbar ist. Um diese Bewegung in kontrollierbaren Schritten und mit kontrollierbarer Geschwindigkeit durchführen zu können, ist der Motor 8 mit einem Rotorlage- und Geschwindigkeitsgeber 10 verbunden.

Der Block 10 trägt zwei im Wechsel betriebene, nachfüllbare Kolben-Zylinder-Einheiten 11 und 12 für das Zwischenspeichern und Abgeben der plastischen Masse, aus welcher Abstandhalter gebildet werden sollen. Die Kolben-Zylinder-Einheiten 11 und 12 sind jeweils mit einem Füllstandsanzeiger 13, 14 mit Endschalter ausgerüstet. Die beiden Kolben-Zylinder-Einheiten 11 und 12 fußen auf einem gemeinsamen Ventilblock 15, in welchen auch ein beheizter Druckschlauch 16 mündet, durch welchen die Zylinder mit der plastischen Masse versorgt werden. Im Ventilblock 15 befindet sich ein Drehschieber, welcher abwechselnd die eine Kolben-Zylinder-Einheit 11 oder 12 mit dem Druckschlauch 16 und die andere Kolben-Zylinder-Einheit 12 bzw. 11 mit einer Düse 17 verbindet.

Die Düse befindet sich an der Spitze einer hohlen Düsenwelle 18, welche drehbar in einer Halterung 19 gelagert ist, in welcher über eine an sich bekannte Drehkupplung das von einer der Kolben-Zylinder-Einheiten 11, 12 ausgepreßte plastische Material in die hohle Düsenwelle 18 gelangt.

Zum Drehen der Düsenwelle 18 in ihrer Halterung 19 ist am Block 5 ein Drehantrieb 20 mit Schleifringübertrager 21 sowie Rotorlage- und Tachogeber 22 angebracht.

Die Düse 17 hat eine schräg zur Ebene 4 verlaufende Endfläche 23, welche spitz zuläuft und unmittelbar eine senkrecht zur Ebene 4 orientierte Austrittsöffnung 24 der Düse begrenzt. Die Austrittsöffnung 24 hat einen im wesentlichen rechteckigen Querschnitt. In der Mitte der Austrittsöffnung läuft die Drehachse 25 der Düsenwelle 18.

Zum Verschließen der Austrittsöffnung 24 ist ein Schieber 26 vorgesehen, welcher auswechselbar zwischen einer parallel zur Achse 25 verlaufenden Wand 27 der Düsenwelle und einem abnehmbaren Gegenhalter 28 auswechselbar angeordnet ist. Zwischen der Wand 27 und dem Gegenhalter 28 ist der Schieber 26 parallel zur Achse 25 verschiebbar geführt. Um ihn verschieben zu können, ist er mit einer Verzahnung 29 versehen, welche mit einem Ritzel 30 kämmt, welches durch einen an der Düsenwelle 18 angebrachten, kleinen Elektromotor 31 kontrolliert antreibbar ist. Die Schieberstellung ist durch ein Potentiometer 32 beeinflußbar.

Der Elektromotor 31 und der Motor 8 sind elektronisch miteinander synchronisiert.

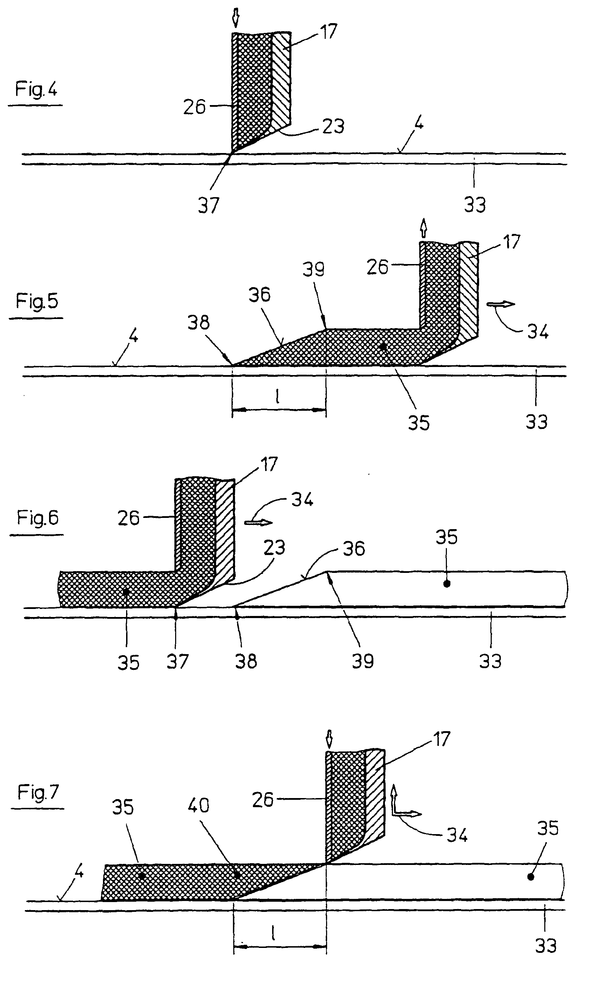

Zur Beschreibung der Arbeitsweise der Vorrichtung wird auf die Figuren 5 bis 7 Bezug genommen.

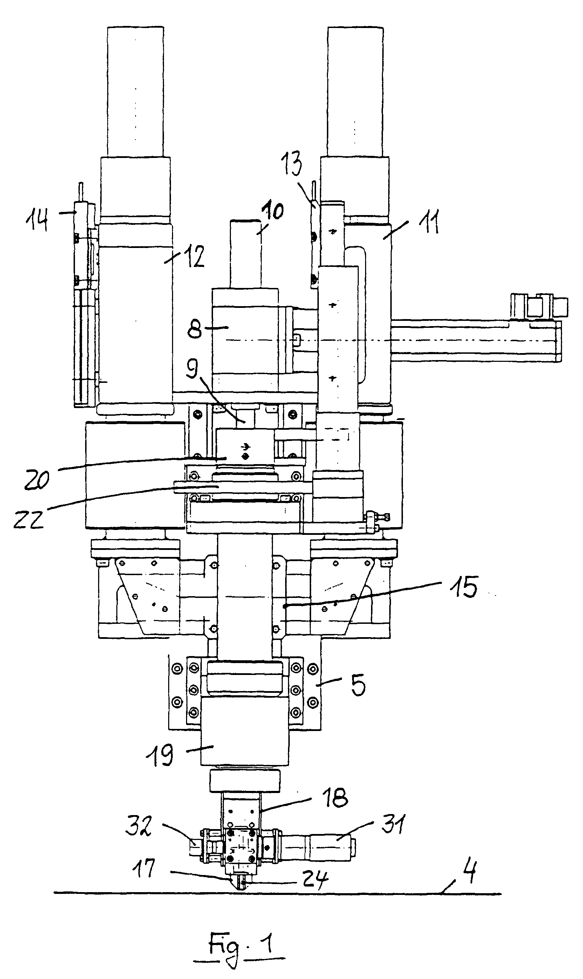

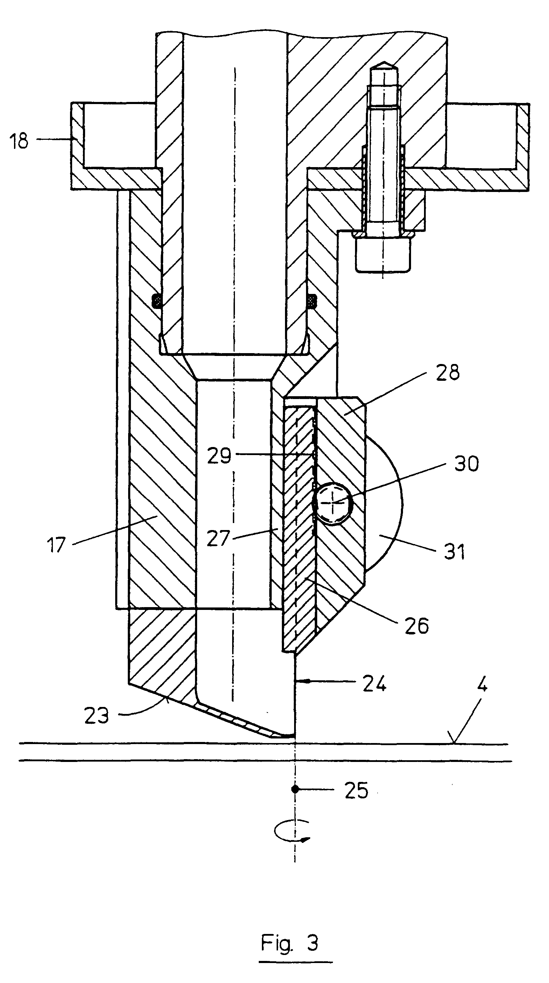

Eine Glastafel 33, auf deren Oberseite ein plastischer Strang als Abstandhalter aufgetragen werden soll, liegt mit ihrer Oberseite in der Ebene 4, welche in den Figuren 1 bis 3 angedeutet ist. Auf diese Oberseite 4 wird die Düse 17 durch Betätigen des Motors 8 abgesenkt (Figur 4), wobei sich der Schieber 26 zunächst in seiner Schließstellung befindet. Die Düse wird dann durch Bewegen längs der Traverse 2 und/oder durch Bewegen der Traverse 2 parallel zur Glastafel 33 in Richtung des Pfeils 34 bewegt, in eine der Austrittsöffnung 24 entgegengesetzte Richtung. In der Startphase der Bewegung wird über eine Strecke der Länge L der Schieber 26 stetig geöffnet, bis er eine vorgegebene Stellung erreicht (Figur 5), in welcher der aus der Düse 17 austretende Strang 35 seine Solldicke D hat. Durch das stetige Öffnen des Schiebers 26 erhält der Strang 35 in der Startphase auf der Strecke L eine stetig zunehmende Dicke, so daß die Oberseite des Strangs dort durch eine Schrägfläche 36 gebildet ist.

Die Düse 17 wird nun parallel zur Glastafel 33 längs deren Randes um die Glastafel 33 herumgeführt und legt dabei einen Strang von gleichbleibendem Querschnitt und gleichbleibender Dicke D auf der Glastafel 33 ab. Schließlich nähert sich die Düse 17 wieder ihrer Ausgangslage (Figur 6). Sie fährt unverändert weiter, bis sie mit ihrer Unterkante 37 die Spitze 38 des Anfangsabschnitts des Strangs 35 erreicht. Wegen des schrägen Verlaufs der unteren Endfläche 23 der Düse, deren Winkel etwas größer gewählt ist als der Winkel der Schrägfläche 36 mit der Glastafel 33, kommt es nicht zu einer flächigen Berührung der unteren Endfläche 23 mit der Schrägfläche 36. Im weiteren Verlauf der Bewegung der Düse 17 in Richtung des Pfeils 34 wird die Düse nun durch Betätigen des Motors 8 kontrolliert so angehoben, daß sich ihre Unterkante 37 längs der Schrägfläche 36 bewegt. Gleichzeitig und synchron dazu wird der Schieber 26 stetig vorgeschoben; er verschließt die Austrittsöffnung, wenn die Unterkante 37 der Düse den oberen Rand 39 der Schrägfläche 36 erreicht hat (Figur 7). Auf diese Weise wird ein keilförmiger Endabschnitt 40 des Strangs gebildet, welcher komplementär zum Anfangsabschnitt des Strangs ausgebildet ist und auf ihm liegt. Vorzugsweise wird der Endabschnitt 40 im Bereich der Strecke L gegenüber der Solldicke D des Strangs etwas überhöht aufgetragen, um beim späteren Verpressen der Isolierglasscheibe eine besonders zuverlässige Verbindung im Bereich der Stoßstelle des Strangs zu erhalten. Diese Überhöhung kann man einfach dadurch erzielen, daß man die Schließbewegung des Schiebers 26 erst startet, nachdem die Unterkante 37 der Düse die Spitze 38 des Anfangsabschnitts des Strangs 35 bereits um eine geringe Länge passiert hat.

## Patentansprüche

1. Verfahren zum Auftragen eines plastischen Strangs (35) als Abstandhalter mit vorgegebener Solldicke (D) auf eine Glastafel (33) zur Bildung von Isolierglasscheiben mit Hilfe einer Düse (17), welche längs des Randes der Glastafel (33) um diese herumbewegt wird und dabei den aus der Düse (17) austretenden Strang (35) auf die Glastafel (33) so ablegt, daß Anfang und Ende des Strangs (35) zusammenstoßen, **dadurch gekennzeichnet, daß** durch veräuderu Austrittsquerschnittes der Aüstrittsöffnung (24) der Düse (17) die Dicke des Strangs (35) beim Austreten aus der Düse (17) am Anfang auf einer Strecke mit vorbestimmter Länge (L) von Null auf die Solldicke (D) gesteigert und komplementär dazu am Ende des Strangs (35) auf derselben Strecke von der Solldikke (D) auf Null verringert wird, wozu der Abstand der Düse (17) von der Glastafel (33) synchron mit dem Schließen der Aüstrittsöffnung erhöht wird.

2. Verfahren nach Anspruch 1, **dadurch gekennzeichnet, daß** die Strecke zwischen 3 cm und 12 cm, vorzugsweise 8-10 cm lang ist.

3. Verfahren nach Anspruch 1 oder 2, **dadurch gekennzeichnet, daß** die Oberseite des Strangs (35) mit einer geringen Wölbung gebildet wird.

4. Verfahren nach einem der vorstehenden Ansprüche, **dadurch gekennzeichnet, daß** an der Stoßstelle zwischen Anfang und Ende des Strangs (35) der auf dem Anfangsabschnitt (36) liegende Endabschnitt (40) mit seiner Oberseite die Solldikke (D) ein wenig übersteigt.

5. Vorrichtung zum Durchführen des Verfahrens nach Anspruch, **gekennzeichnet durch**
eine Düse (17) mit einem im wesentlichen rechteckigen Austrittsquerschnitt und mit einem Schieber (26) zum Verschließen der Austrittsöffnung (24) der Düse (17),
mit einem ersten Antrieb (31) zum Betätigen des Schiebers (26),
mit einem zweiten Antrieb (3) zum Bewegen der Düse (17) in einer Ebene (4),
und mit einem dritten Antrieb (8) zum Bewegen der Düse (17) quer zu jener Ebene (4), wobei der erste Antrieb (31) und der dritte Antrieb (8) miteinander synchronisiert sind.

6. Vorrichtung nach Anspruch 5, **dadurch gekennzeichnet, daß** die Austrittsöffnung (24) der Düse (17) sich rechtwinklig zu jener Ebene (4) erstreckt und der Bewegungsrichtung (34) der Düse (17) entgegengerichtet ist.

7. Vorrichtung nach Anspruch 6, **dadurch gekennzeichnet, daß** sich die Austrittsöffnung (24) bis unmittelbar an das der Glastafel (33) zugewandte Ende der Düse (17) erstreckt und daß sich die sich daran anschließende Endfläche (23) der Düse (17) schräg zu jener Ebene (4) erstreckt.

8. Vorrichtung nach einem der Ansprüche 5 bis 7, **dadurch gekennzeichnet, daß** der Schieber (26) einen schwach konkav gewölbten unteren Rand hat.

## Claims

1. A method for applying a plastic strand (35), as a spacer with a predefined intended thickness (D), onto a glass panel (33) in order to constitute insulating glass panes, by means of a nozzle (17) which is moved along the edge of the glass panel (33) around the latter and thereby deposits the strand (35) emerging from the nozzle (17) onto the glass panel (33) so that the beginning and end of the strand (35) abut one another, **wherein,** by modifying the outlet cross section of the outlet opening of the nozzle (17), the thickness of the strand (35) upon emergence from the nozzle (17) is increased, at the beginning of a segment with a defined length (L), from zero to the intended thickness (D); and in complementary fashion thereto, at the end of the strand (35) is decreased over the same length from the intended thickness (D) to zero, for which purpose the distance between the nozzle (17) and the glass panel (33) is increased while synchronously the outlet opening is closed.

2. The method as defined in Claim 1, wherein the segment is between 3 cm and 12 cm, preferably 8-10 cm long.

3. The method as defined in Claim 1 or 2, wherein the upper side of the strand (35) is configured with a slight convexity.

4. The method as defined in one of the foregoing Claims, wherein at the abutting point between beginning and end of the strand (35), the end section (40) located on the beginning section (36) slightly exceeds the intended thickness (D) on its upper side.

5. An apparatus for performing the method as defined in Claim 1, **characterized by** a nozzle (17) having a substantially rectangular outlet and having a slide valve (26) for closing off the outlet opening (24) of the nozzle (17), having a first drive system (31) for actuation of the slide valve (26), having a second drive system (3) to move the nozzle (17) in a plane (4), and having a third drive system (8) to move the nozzle (17) transverse to said plane (4), the first drive system (31) and the third drive system (8) being synchronized with one another.

6. The apparatus as defined in Claim 5, wherein the outlet opening (24) of the nozzle (17) extends at right angles to said plane (4) and is directed opposite to the movement direction (34) of the nozzle (17).

7. The apparatus as defined in Claim 6, wherein the outlet opening (24) extends all the way to the end of the nozzle (17) facing the glass panel (33); and the end surface (23) of the nozzle (17) adjacent thereto extends obliquely with respect to said plane (4).

8. The apparatus as defined in one of Claims 5 to 7, wherein the slider has a lower edge with a slight concave curvature.

## Revendications

1. Procédé pour appliquer un boudin (35) en matière plastique à titre d'agent d'écartement, possédant une épaisseur de consigne (D) prédéfinie, sur un pan de verre (33) pour former des vitres insolantes, à l'aide d'une filière (17) que l'on déplace autour du pan de verre (33) le long de son bord et en déposant en l'occurrence, sur le pan de verre (33), le boudin (35) quittant la filière (17) de telle sorte que le début et la fin du boudin (35) se rejoignent, **caractérisé en ce que**, par variation de la section transversale d'évacuation de l'ouverture d'évacuation (24) de la filière (17), l'épaisseur du boudin (35) à la sortie de la filière (17) augmente au début sur un troncon de longueur prédéterminée (L) depuis la valeur zéro pour atteindre l'épaisseur de consigne (D) et, de manière complémentaire à cette augmentation, diminue à la fin du boudin (35) sur le même troncon en passant de l'épaisseur de consigne (D) à la valeur zéro, c'est pourquoi que le distance entre la filière (17) et le pan de verre (33) serat augmenté de manière synchrone pendant la fermeture de l'ouverture d'évacuation.

2. Procédé selon la revendication 1, **caractérisé en ce que** le tronçon possède une longueur entre 3 cm et 12 cm, de préférence entre 8 cm et 10 cm.

3. Procédé selon la revendication 1 ou 2, **caractérisé en ce que** le côté supérieur du boudin (35) est légèrement bombé.

4. Procédé selon l'une quelconque des revendications précédentes, **caractérisé en ce qu'**à l'endroit de contact entre le début et la fin du boudin (35), la section terminale (40) se trouvant sur la section de départ (36) surpasse légèrement l'épaisseur de consigne (D) avec son côté supérieur.

5. Dispositif pour la mise en oeuvre du procédé selon la revendication 1, **caractérisé par** une filière (17) possédant une section transversale de sortie essentiellement rectangulaire et comprenant un coulisseau (26) pour fermer l'ouverture de sortie (24) de la filière (17), un premier entraînement (31) pour la commande du coulisseau (26), un deuxième entraînement (3) pour déplacer la tuyère (17) dans un plan (4), et un troisième entraînement (8) pour déplacer la filière (17) transversalement audit plan (4), le premier entraînement (31) et le troisième entraînement (8) étant mutuellement synchronisés.

6. Dispositif selon la revendication 5, **caractérisé en ce que** l'ouverture de sortie (24) de la filière (17) s'étend perpendiculairement audit plan (4), le mouvement (34) de la filière (17) s'effectuant dans le sens opposé.

7. Dispositif selon la revendication 6, **caractérisé en ce que** l'ouverture de sortie (24) s'étend jusqu'à un endroit situé directement contre l'extrémité de la filière (17) tournée vers le pan de verre (33) et **en ce que** la surface terminale (23) de la filière (17), qui s'y raccorde, s'étend en inclinaison par rapport audit plan (4).

8. Dispositif selon l'une quelconque des revendications 5 à 7, **caractérisé en ce que** le coulisseau (26) possède un bord inférieur présentant une courbure légèrement concave.
